Europäisches Patentamt

European Patent Office

Office européen des brevets

(19)

(11) Numéro de publication : **0 003 201**
**B1**

(12)
# FASCICULE DE BREVET EUROPÉEN

(45) Date de publication du fascicule du brevet :
19.05.82

(51) Int. Cl.³ : **B 65 D   6/32**, B 60 T  11/26

(21) Numéro de dépôt : **79400024.0**

(22) Date de dépôt : **12.01.79**

(54) **Réservoir à liquide.**

(30) Priorité : **13.01.78 FR 7800867**

(43) Date de publication de la demande :
**25.07.79 (Bulletin 79/15)**

(45) Mention de la délivrance du brevet :
**19.05.82 Bulletin 82/20**

(84) Etats contractants désignés :
**DE GB SE**

(56) Documents cités :
**DE - A - 2 728 308**
**FR - A - 2 287 369**
**GB - A - 1 316 937**
**US - A - 3 147 596**

(73) Titulaire : **SOCIETE ANONYME D.B.A.**
**98 boulevard Victor Hugo**
**F-92115 Clichy (FR)**

(72) Inventeur : **Come, Philippe**
**16 rue Louise Borme**
**F-77230 Dammartin en Goelie (FR)**

(74) Mandataire : **Brullé, Jean et al**
**Service Brevets Bendix 44, rue François 1er**
**F-75008 Paris (FR)**

Imprimerie Jouve, 18, rue St-Denis, 75001 Paris, France

Réservoir à liquide

La présente invention a pour objet un réservoir à liquide à deux compartiments, notamment pour l'alimentation en fluide hydraulique de maîtres-cylindres doubles, ce réservoir étant plus précisément composé de deux parties complémentaires superposées et assemblées par collage, thermosoudage ou tout autre procédé analogue, une cloison médiane solidaire desdites parties et orientée transversalement par rapport à l'axe longitudinal du réservoir partageant l'intérieur de celui-ci en deux compartiments pourvus chacun d'un orifice de sortie, l'un au moins de ces compartiments possédant en outre un orifice de remplissage, et les deux compartiments communiquant entre eux par l'intermédiaire d'un canal de transfert qui pénètre dans chacun d'eux et qui court parallèlement au plan du niveau de liquide contenu dans le réservoir et sensiblement à hauteur de la valeur maximale de ce niveau.

Le canal de transfert précité permet au fluide hydraulique de passer de l'un des compartiments du réservoir dans l'autre lorsque l'on procède à son remplissage en fluide hydraulique. Il doit être toutefois conçu de telle manière qu'une quantité suffisante de fluide soit retenue dans chacun desdits compartiments, lesquels sont respectivement reliés aux chambres du maître-cylindre double, lorsque le véhicule subit des accélérations ou décélérations élevées, ou encore lorsqu'il stationne sur un terrain en forte pente.

Un tel réservoir est notamment décrit par le brevet britannique GB-A-1 316 937, lequel prévoit la mise en place d'une plaque déflectrice courant parallèlement au niveau du liquide et délimitant avec le couvercle du réservoir un passage de section réduite entre les deux compartiments.

Le brevet US-A-3 147 596 décrit de son côté, dans le cas d'un réservoir faisant corps avec le maître-cylindre, la mise en place d'un canal de transfert de section circulaire à travers la cloison médiane, ce canal pénétrant dans chacun des deux compartiments du réservoir sensiblement jusqu'en son milieu.

Ces réalisations connues de l'état de la technique présentent toutes l'inconvénient de nécessiter, pour la mise en place du canal de transfert et pour sa fixation, une ou plusieurs opérations supplémentaires qui ne peuvent qu'influencer défavorablement le coût de fabrication du réservoir.

On connaît enfin du DE-A-2 728 308 un réservoir dans lequel le canal de transfert se compose de deux portions profilées complémentaires, à savoir une portion inférieure venue de matière avec la partie inférieure du réservoir et une portion supérieure venue de matière avec la partie supérieure du réservoir. En pratique, compte tenu des techniques usuelles de moulage, le canal de transfert est situé à l'extérieur des compartiments, ce qui augmente l'encombrement du réservoir.

La présente invention se donne pour but de remédier à ces inconvénients, ceci en concevant le canal de transfert de façon telle que sa mise en place s'effectue aisément et que son immobilisation ne nécessite aucune opération supplémentaire de fabrication.

Ce but est atteint, conformément à l'invention, et dans le cas d'un réservoir à liquide du genre défini ci-dessus, grâce au fait que la portion inférieure du canal est constituée par un élément distinct de la partie inférieure du réservoir et repose sur le fond d'une échancrure de forme correspondante pratiquée dans la cloison médiane du réservoir, avec interposition d'un dispositif d'étanchéité, le plan de jonction des portions constitutives du canal coïncidant avec celui des parties constitutives du réservoir de manière à permettre l'assemblage du tout au moyen d'une seule et même opération.

Il suffit dès lors, au moment de l'assemblage du réservoir, de mettre en place le profilé dans l'échancrure prévue à cet effet, et de procéder à l'opération d'assemblage proprement dit (par exemple, par thermosoudage au moyen d'un miroir chauffant), tout comme cela serait le cas en l'absence d'un tel canal de transfert ; du fait que le plan de jonction des portions constitutives du canal coïncide avec celui des parties constitutives du réservoir, une seule et même opération suffit pour assembler l'un et l'autre.

Les caractéristiques et avantages de l'invention apparaîtront plus clairement à la lecture de la description suivante d'une forme préférentielle de réalisation, donnée à simple titre d'exemple illustratif, et avec référence aux dessins ci-annexés, en lesquels :

la figure 1 représente en élévation latérale un réservoir à liquide selon l'invention, des crevés ménagés à travers la paroi latérale laissant apercevoir certains détails de la structure intérieure ;

la figure 2 est une vue en plan de dessus du réservoir de la figure 1 ;

la figure 3 est une vue éclatée et partiellement en coupe prise de l'avant du réservoir et montrant ses deux parties constitutives avant mise en place du canal de transfert et assemblage ;

la figure 4 est une vue en coupe transversale du réservoir une fois assemblé, cette coupe étant prise selon la ligne IV-IV de la figure 2 ;

la figure 5 est une vue en plan de dessus du canal de transfert ; et

la figure 6 montre en vue perspective et à échelle agrandie un détail de réalisation de ce canal de transfert, cette vue étant prise selon la ligne de coupe VI-VI de la figure 5.

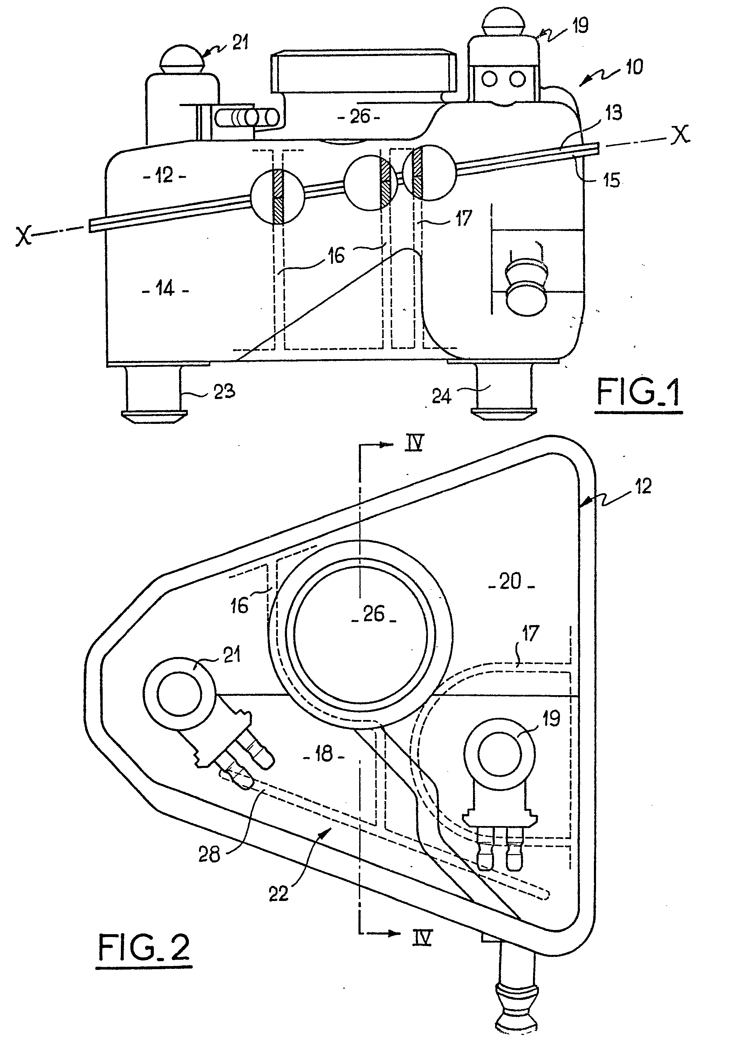

Le réservoir à liquide 10 représenté sur les dessins est de forme générale triangulaire et se compose de deux parties complémentaires superposées 12 et 14. Ces deux parties du réservoir sont réalisées l'une comme l'autre en une matière thermoplastique de composition appropriée, et elles comportent chacune, au niveau du plan de jonction X-X, un rebord périphérique en forme de bride 13 ou 15. C'est par une opération de thermosoudage effectuée au niveau du plan X-X entre les rebords 13 et 15 que s'effectue l'assemblage des deux parties constitutives du réservoir. Cette opération peut, par exemple, être exécutée selon la méthode dite du miroir chauffant. On remarquera, à l'examen de la figure 1 des dessins, que le plan de jonction X-X occupe une position oblique par rapport au fond du réservoir ; cette particularité tient au fait que ce réservoir est destiné à être monté sur un maître-cylindre lui-même fixé selon une position oblique, en sorte qu'en position d'utilisation réelle le plan de jonction X-X sera orienté horizontalement, et donc parallèlement au niveau du liquide contenu dans le réservoir.

Une cloison transversale 16, dont le tracé sinueux apparaît clairement sur la figure 2, partage l'intérieur du réservoir 10 en deux compartiments 18 et 20 de capacité sensiblement comparable. Cette cloison médiane 16 est elle aussi formée de deux éléments de cloison superposés solidaires respectivement de la partie supérieure 12 et de la partie inférieure 14 du réservoir ; comme le montrent les détails rendus apparents par les crevés de la figure 1, le plan de jonction de ces éléments superposés de la cloison médiane 16 se confond avec celui des parties constitutives du réservoir, en sorte que la solidarisation de ces éléments de cloison s'effectue en même temps et grâce à la même opération de thermosoudage que celle des deux parties constitutives du réservoir. Au terme de cette opération, la cloison médiane 16 sépare de façon étanche les deux compartiments 18 et 20 l'un de l'autre, ces compartiments ne pouvant plus dès lors communiquer l'un avec l'autre que par l'intermédiaire du canal de transfert 22 ci-après décrit. Une autre cloison 17, de tracé sensiblement semi-circulaire, et raccordée à l'arrière du réservoir par des éléments de tracé rectiligne, délimite à l'intérieur du compartiment 20 un puits servant au guidage du flotteur d'un dispositif électrique de mesure de niveau 19, d'un type en lui-même connu. Cette cloison 17 est réalisée selon le même principe que la cloison médiane 16, au moyen de deux éléments superposés solidaires des deux parties constitutives du réservoir, ces éléments étant à leur tour solidarisés entre eux lors de l'opération d'assemblage. Un autre dispositif électrique de mesure de niveau 21 peut être pareillement prévu dans l'autre compartiment 18 du réservoir.

Deux orifices de sortie 23 et 24 ménagés au fond de la partie inférieure 14 du réservoir permettent aux compartiments 18 et 20 de communiquer respectivement avec les deux chambres de pression d'un maître-cylindre double sur lequel est monté ce réservoir. Une ouverture de remplissage 26 est d'autre part ménagée dans la partie supérieure 12 du réservoir, cette ouverture qui débouche uniquement dans le compartiment 20 servant au remplissage du réservoir en fluide hydraulique. Lorsque ce dernier est versé à travers l'ouverture de remplissage 26, il emplit en premier lieu le compartiment 20 jusqu'au moment où son niveau atteint celui du canal de transfert 22, instant à partir duquel le trop-plein du compartiment 20 s'écoule vers le compartiment 18 qui s'emplit à son tour. L'opération de remplissage est terminée, lorsque le niveau du liquide dans les deux compartiments est juste affleurant au fond du canal de transfert 22, ou légèrement au-dessus de celui-ci. Le canal de transfert 22 pénètre assez profondément dans chacun des deux compartiments 18 et 20 pour assurer que, en cas de pivotement du réservoir autour d'un axe transversal à l'axe longitudinal du véhicule, par exemple lorsque celui-ci stationne sur un terrain en forte pente, ou encore en cas de forte accélération ou décélération du véhicule, seule une fraction du liquide contenu dans l'un des compartiments 18 ou 20 passe dans l'autre, en sorte qu'il reste toujours dans chacun de ces compartiments un volume de fluide suffisant pour garantir un fonctionnement sûr des freins.

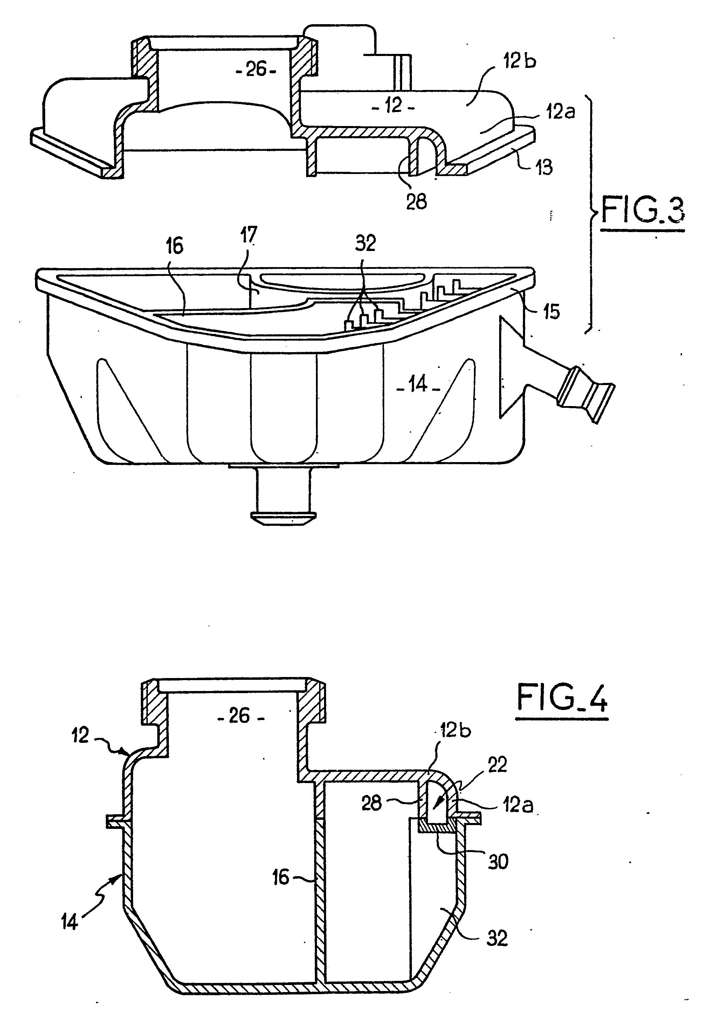

Conformément à la présente invention, le canal de transfert 22 se compose lui-même de deux portions profilées complémentaires et superposées. Ainsi qu'il apparaît aux figures 3 et 4 des dessins, la portion supérieure du canal de transfert est délimitée par la propre paroi latérale 12a de la partie supérieure 12 du réservoir, par la zone marginale 12b du dessus de cette partie du réservoir qui est adjacente à la paroi latérale 12a, et par une nervure verticale 28 formée d'une seule pièce avec ladite partie du réservoir et courant parallèlement à ladite paroi latérale ; cette portion supérieure du canal de transfert se trouve ainsi faire partie intégrante de la partie supérieure 12 du réservoir. La portion inférieure 30 du canal de transfert est elle-même conformée à la manière d'une gouttière, et elle est constituée par un profilé en forme générale de U qui est porté par la partie inférieure 14 du réservoir. Comme le montre plus particulièrement la coupe transversale de la figure 4, les ailes de ce profilé 30 sont orientées verticalement vers le haut et elles sont alignées respectivement avec la paroi latérale 12a de la partie supérieure 12 du réservoir (à cet effet, le rebord 13 de la partie supérieure du réservoir est prévu un peu plus large en cet emplacement que le rebord 15 de sa partie inférieure), et avec la nervure 28 précitée. On voit ainsi que les deux portions constitutives du canal de transfert définissent ensemble un profil fermé, et que le plan de jonction de ces portions constitutives du canal de transfert coïncide avec celui des parties constitutives du réservoir, ce qui permet, ici encore, de les solidariser l'une avec l'autre en même temps que les deux parties du réservoir et au moyen de la même opération d'assemblage, par exemple par thermosoudage. Ainsi constitué, le canal de transfert 22 court le long d'une des parois latérales du réservoir et parallèlement au niveau du liquide qui y est contenu, le fond de ce canal de transfert se situant de préférence légèrement en dessous de la cote maximale de ce niveau.

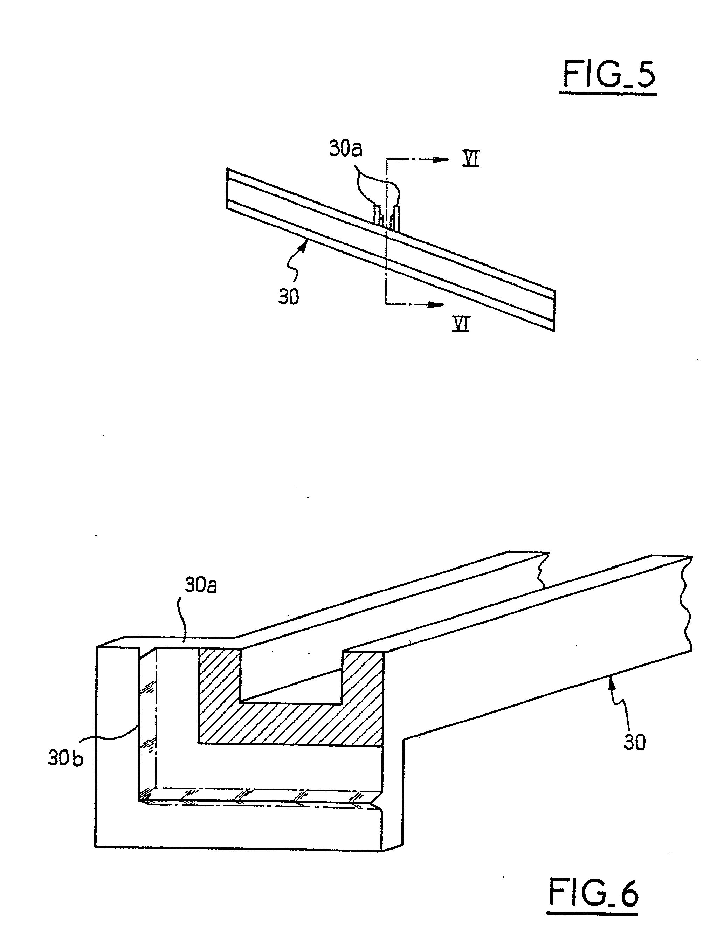

Le profilé 30 se présente sous la forme d'une pièce indépendante et rapportée, qui est représentée en vue de dessus à la figure 5 des dessins. Sa longueur est choisie de façon telle que le canal de transfert pénètre largement à l'intérieur des deux compartiments 18 et 20 du réservoir, pour les raisons qui ont déjà été évoquées plus haut. Pour assurer un positionnement correct du profilé 30 le long de la paroi latérale du réservoir, il paraît indiqué de former, d'une seule pièce avec la partie inférieure 14 du réservoir, des éléments de cloison transversaux et verticaux 32 qui jouent en quelque sorte le rôle de consoles ; des échancrures rectangulaires de forme correspondante au périmètre extérieur du profilé 30 sont alors ménagées dans ces éléments de cloison 32 ainsi que dans la cloison médiane 16 du réservoir (voir en particulier figure 3 des dessins). Ces diverses échancrures sont alignées les unes avec les autres et assurent par ailleurs, au moment de l'assemblage du réservoir, une application uniforme des ailes du profilé 30 contre la paroi latérale 12a et contre la nervure 28 sur toute la longueur du canal de transfert. Il est d'autre part indiqué, pour assurer un positionnement correct du profilé 30 dans le sens de sa longueur, de le munir d'au moins une paire de brides transversales et parallèles 30a destinées à encadrer et à pincer la cloison médiane 16 du réservoir, par exemple, ou encore un ou plusieurs des éléments de cloison transversaux 32. Dans le cas où ce profilé 30 est lui-même réalisé en une matière thermo-plastique, comme le sont les deux parties constitutives du réservoir, il est facile de former ces brides 30a d'une seule pièce avec lui. Comme le montre la figure 6 des dessins, ces brides peuvent porter sur leurs faces en regard des nervures 30b en saillie, par exemple de section triangulaire, lesquelles forment joint d'étanchéité avec la cloison médiane ou avec l'élément de cloison transversal sur lequel elles prennent appui ; cet artifice peut contribuer à parfaire l'étanchéité entre les deux compartiments du réservoir au niveau du fond de l'échancrure ménagée dans la cloison médiane 16 pour recevoir le profilé 30.

La succession des opérations d'assemblage du réservoir se déduit aisément de la description qui précède : la partie inférieure 14 du réservoir étant posée à plat, on met tout d'abord en place le profilé 30 en l'encastrant dans les échancrures prévues à cet effet au sommet de la cloison médiane 16 ainsi que des éléments de cloison transversaux 32, et en prenant soin d'engager les deux brides 30a de part et d'autre de la cloison médiane 16. Le profilé 30 étant mis en place, la partie supérieure 12 du réservoir est approchée de la partie inférieure 14 munie de ce profilé 30, et toutes deux sont appliquées de part et d'autre d'une plaque chauffante si l'on recourt à la méthode du miroir chauffant pour réaliser l'assemblage du réservoir. Lorsque la température de ramollissement de la matière thermo-plastique constitutive de ces diverses parties est atteinte, la plaque chauffante est rapidement retirée et les deux parties 12 et 14 sont appliquées sous une légère pression l'une contre l'autre afin de les solidariser par thermo-soudage. Du fait que les divers plans de jonctions définis ci-dessus sont tous confondus, cette opération permet de solidariser à la fois entre elles les deux parties constitutives du réservoir, les portions inférieure et supérieure de la cloison médiane 16 et de la cloison 17, et enfin les deux portions constitutives du canal de transfert 22. Ce dernier se trouve ainsi réalisé sans autre opération de fabrication supplémentaire que la mise en place du profilé 30 dans les échancrures prévues à cet effet dans la partie inférieure 14 du réservoir.

## Revendications

1. Réservoir à liquide à deux compartiments, notamment pour l'alimentation en fluide hydraulique de maîtres-cylindre doubles, composé de deux parties complémentaires (12, 14) superposées et assemblées par collage, thermosoudage ou tout autre procédé analogue, une cloison médiane (16) solidaire desdites parties et orientée transversalement par rapport à l'axe longitudinal du réservoir partageant l'intérieur de celui-ci en deux compartiments (18, 20) pourvus chacun d'un orifice de sortie (23-24), l'un au moins de ces compartiments possédant en outre un orifice de remplissage (26), et les deux compartiments communiquant entre eux par l'intermédiaire d'un canal de transfert (22) qui pénètre dans chacun d'eux et qui court parallèlement au plan du niveau de liquide contenu dans le réservoir et sensiblement à la hauteur de la valeur maximale de ce niveau, ce canal de transfert se composant lui-même de deux portions profilées complémentaires superposées, à savoir une portion inférieure (30) en forme générale de gouttière portée par la partie inférieure (14) du réservoir et une portion supérieure solidaire de la partie supérieure du réservoir (12), lesdites portions définissant ensemble un profil fermé, caractérisé par le fait que la portion inférieure du canal est constituée par un élément distinct de la partie inférieure du réservoir et repose sur le fond d'une échancrure de forme correspondante pratiquée dans la cloison médiane du réservoir, avec interposition d'un dispositif d'étanchéité, le plan de jonction des portions constitutives du canal coïncidant avec celui des parties constitutives du réservoir de manière à permettre l'assemblage du tout au moyen d'une seule et même opération.

2. Réservoir selon la revendication 1, caractérisé par le fait que le canal de transfert court le long d'une au moins des parois latérales du réservoir et que sa portion supérieure est constituée par la propre paroi latérale (12a) de la partie supérieure du réservoir, par la zone marginale de son dessus (12b) qui y est adjacente, et par une nervure verticale (28) formée d'une seule pièce avec ladite partie et courant parallèlement à ladite paroi latérale.

3. Réservoir selon la revendication 2, caractérisé par le fait que la portion inférieure du canal est constituée par un profilé (30) en forme générale de U dont les ailes orientées verticalement vers le haut sont alignées respectivement avec ladite paroi latérale et avec ladite nervure de la partie supérieure du réservoir.

4. Réservoir selon la revendication 3, caractérisé par le fait que ledit profilé (30) repose également sur le fond d'échancrures de forme correspondante pratiquées dans des éléments de cloison transversaux (32) formés d'une pièce avec la partie inférieure du réservoir et jouant le rôle de consoles.

5. Réservoir selon la revendication 4, caractérisé par le fait que le profilé (30) constituant la portion inférieure du canal est muni d'au moins une paire de brides transversales et parallèles (30a) destinées à encadrer et à pincer la cloison médiane (16) du réservoir et/ou un ou plusieurs des éléments de cloison transversaux (32) afin d'immobiliser longitudinalement ledit profilé au cours des opérations d'assemblage du réservoir.

6. Réservoir selon la revendication 5, caractérisé par le fait que les brides dudit profilé portent sur leurs faces en regard des nervures (30b) en saillie formant joint d'étanchéité avec la cloison médiane ou l'élément de cloison transversal sur lequel elles prennent appui.

**Claims**

1. Reservoir for fluid with two compartments, notably for hydraulic fluid supply of double master cylinder, comprised of two complementary shells (12, 14) superposed and assembled by sticking, heat-welding and other similar processes, an intermediate partition (16) solid with said shells and extending transversely with respect to the longitudinal axis of the reservoir dividing the interior thereof into two compartments (18, 20) each provided with an outlet port (23, 24), at least one of said compartments being also provided with a filling orifice (26) and both compartments being in mutual communication through a transfer duct (22) which projects into each of them and extends in parallel relationship with the surface of the fluid contained in the reservoir and substantially at the height of the maximum level of this surface, the transfer duct itself being comprised of two superposed complementary profiled portions, namely a bottom portion (30) in the general shape of a gutter carried by the bottom shell (14) of the reservoir and a top portion solid with the top shell of the reservoir (12), said portions of the transfer duct defining together a closed outline, characterized in that the bottom portion of the duct is comprised of a component separate from the bottom shell and lies on the bottom of a notch of matching shape provided in the intermediate partition of the reservoir, with provision of a tightness device therebetween, the junction plane of the two portions of the duct coinciding with that of the two shells of the reservoir, in order to permit the assembly of the whole by a single operation.

2. Reservoir for fluid according to Claim 1, characterized in that the transfer duct extends along at least one of the lateral faces of the reservoir and that its top portion is comprised of the own lateral side (12a) of the top shell of the reservoir, of the marginal zone of its top (12b) adjacent thereto, and of a vertical rib (28) solid with said top shell and extending parallel to said lateral side.

3. Reservoir for fluid according to Claim 2, characterized in that the bottom portion of the duct is comprised of a U-shaped channel bar (30) whode wings extend upwards and are aligned respectively with said lateral side and with said rib of the top shell of the reservoir.

4. Reservoir for fluid according to Claim 3, characterized in that said channel bar (30) also lies on the bottom of notches of matching shape provided in transverse partition portions (32), solid with the bottom shell of the reservoir and acting as supports.

5. Reservoir for fluid according to Claim 4, characterized in that the channel bar (30) forming the bottom portion of the duct is formed with at least a pair of parallel transverse flanges (30a) provided to straddle and squeeze the intermediate partition (16) of the reservoir and/or one or more of the transverse partition portions (32) in order to lock said channel bar in the longitudinal direction during the assembly operations of the reservoir.

6. Reservoir for fluid according to Claim 5, characterized in that said flanges of the channel bar bear on their facing sides protruding ribs (30b) forming a seal with the intermediate partition portion on which they are applied.

**Ansprüche**

1. Flüssigkeitsbehälter mit zwei Abteilen, insbesondere zur Versorgung von Doppel-Hauptbremszylindern mit hydraulischem Arbeitsmittel, mit zwei übereinander angeordneten und durch Kleben, Verschweißen oder ein beliebiges analoges Verfahren verbundenen komplementären Behälterteilen (12, 14), mit einer mittleren Trennwand (16), die fest mit den Behälterteilen verbunden ist, transversal zur Längsachse des Behälters ausgerichtet ist und dessen Innenraum in zwei Abteile (18, 20) unterteilt, die jeweils mit einer Auslaßöffnung (23-24) versehen sind, mit einer Nachfüllöffnung (26) für mindestens eines der Abteile und mit einem Überführungskanal (22), über welchen die beiden Abteile miteinander in Verbindung stehen, welcher in jedes der Abteile hineingeführt ist, welcher parallel zur Niveauebene der im Behälter befindlichen Flüssigkeit im wesentlichen in Höhe des Maximalwertes des Flüssigkeitsspiegels verläuft und welcher seinerseits zwei übereinander angeordnete komplementäre Kanalabschnitte aufweist, nämlich einen im wesentlichen rinnenförmigen unteren Kanalabschnitt (30), der vom unteren Behälterteil (14) getragen ist, und einen oberen Kanalabschnitt, der mit dem oberen Behälterteil (12) verbunden ist, wobei die beiden Kanalabschnitte zusammen ein geschlossenes Profil vorgeben, dadurch gekennzeichnet, daß der untere Kanalabschnitt durch ein vom unteren Behälterteil gesondertes Bauteil gebildet ist und auf dem Boden einer entsprechende Form aufweisenden Ausnehmung aufsitzt, die in der mittleren Trennwand des Behälters ausgebildet ist, wobei eine Dichteinrichtung zwischengeschaltet ist und wobei die Stoßebene der zusammen den Überführungskanal bildenden Kanalabschnitte mit der Stoßebene der den Behälter bildenden Behälterteile zusammenfällt, so daß die gesamte Anordnung durch eine einzige Operation gleichzeitig zusammengebaut werden kann.

2. Behälter nach Anspruch 1, dadurch gekennzeichnet, daß der Überführungskanal längs mindestens einer der Seitenwände des Behälters verläuft und daß sein oberer Kanalabschnitt gebildet ist durch die Seitenwand (12a) selbst des oberen Behälterteiles, durch den Randabschnitt (12b) der oberen Wand des oberen Behälterteils, welcher der genannten Seitenwand benachbart ist, und durch eine vertikale Rippe (28), die an das obere Behälterteil angeformt ist und parallel zu der genannten Seitenwand desselben verläuft.

3. Behälter nach Anspruch 2, dadurch gekennzeichnet, daß der untere Kanalabschnitt durch ein Profilteil (30) gebildet ist, welches im wesentlichen die Form eines U aufweist, dessen Schenkel vertikal nach oben weisen und mit der besagten Seitenwand bzw. der Rippe des oberen Behältertiels ausgefluchtet sind.

4. Behälter nach Anspruch 3, dadurch gekennzeichnet, daß das Profilteil (30) ebenfalls auf dem Boden von entsprechende Form aufweisenden Ausnehmungen aufsitzt, welche in transversalen Trennwänden (32) ausgebildet sind, die an das untere Behälterteil angeformt sind und die Funktion von Konsolen haben.

5. Behälter nach Anspruch 4, dadurch gekennzeichnet, daß das den unteren Kanalabschnitt bildende Profilteil (30) zumindest mit einem Paar transversaler und zueinander paralleler Flansche (30a) versehen ist, die dazu dienen, die mittlere Trennwand (16) des Behälters und/oder eine oder mehrere der transversalen Trennwände (32) zwischen sich aufzunehmen und einzudämmen, um das Profilteil während der Arbeitsschritte des Behälterzusammenbaus in longitudinaler Richtung festzulegen.

6. Behälter nach Anspruch 5, dadurch gekennzeichnet, daß die Flansche des Profilteiles auf ihren Stirnflächen vorspringende Rippen (30b) tragen, welche zusammen mit der mittleren Trennwand des Behälters oder der transversalen Trennwand, auf welchem sie abgestützt sind, eine Dichtstelle bilden.

FIG.1

FIG.2

FIG.3

FIG_4

## FIG.5

30a

VI

30

VI

## FIG.6

30a

30b

30